# EUROPÄISCHE PATENTSCHRIFT

(11) **EP 1 599 697 B1**
(45) Veröffentlichungstag und Bekanntmachung des Hinweises auf die Patenterteilung: **18.07.2007**
(21) Anmeldenummer: 03714777.4
(22) Anmeldetag: 05.03.2003
(51) Int. Cl.: F27D 1/00

(54) **GROSSVOLUMIGER INDUSTRIEOFEN MIT FEUERFESTEM MAUERWERK**
LARGE CAPACITY INDUSTRIAL FURNACE WITH REFRACTORY WALL
FOUR INDUSTRIEL DE GROSSE CAPACITE AVEC MURS REFRACTAIRES.

(43) Veröffentlichungstag der Anmeldung: 30.11.2005
(73) Patentinhaber: Refratechnik Holding GmbH, 85737 Ismaning (DE)
(72) Erfinder: KLISCHAT, Hans-Jürgen, 37130 Gleichen (DE); WIRSING, Holger, 37083 Göttingen (DE); FERNANDEZ, Antonio, C/FCA Escriva No2-Piso 2o, El Perello (Sueca), 46420 Valencia (ES)
(74) Vertreter: Patentanwälte Dr. Solf & Zapf
(86) Internationale Anmeldenummer: PCT/EP2003/002248
(87) Internationale Veröffentlichungsnummer: WO 2004/079284

(56) Entgegenhaltungen:
- EP-A- 1 058 077
- DE-A- 19 954 893
- GB-A- 696 095
- DATABASE WPI Section Ch, Week 199436 Derwent Publications Ltd., London, GB; Class L02, AN 1994-291638 XP002260586 & KR 9 309 349 B (KOREA IND TECHNOLOGY INST), 28. September 1993 (1993-09-28)
- PATENT ABSTRACTS OF JAPAN vol. 018, no. 001 (C-1148), 6. Januar 1994 (1994-01-06) & JP 05 246787 A (KAWASAKI REFRACT CO LTD), 24. September 1993 (1993-09-24)
- BARTHA P ET AL: "HARZGEBUNDENE MGO-C-STEINE ZUR FEUERFESTEN AUSKLEIDUNG METALLURGISCHER GEFAESSE" STAHL UND EISEN, VERLAG STAHLEISEN GMBH. DUSSELDORF, DE, Bd. 117, Nr. 1, 21. Januar 1997 (1997-01-21), Seiten 75-80, XP000641607 ISSN: 0340-4803
- DATABASE WPI Section Ch, Week 199209 Derwent Publications Ltd., London, GB; Class L02, AN 1992-070009 XP002260587 & JP 04 015484 A (SHINAGAWA FIRE BRICK), 20. Januar 1992 (1992-01-20)
- DATABASE WPI Section Ch, Week 198134 Derwent Publications Ltd., London, GB; Class L02, AN 1981-61508D XP002260588 & JP 56 084371 A (KYUSHU REFRACTORIES CO LTD), 9. Juli 1981 (1981-07-09)
- PATENT ABSTRACTS OF JAPAN vol. 016, no. 077 (M-1214), 25. Februar 1992 (1992-02-25) & JP 03 263586 A (SHOWA DENKO KK;OTHERS: 02), 25. November 1991 (1991-11-25)
- SCHUBIN W I: "FEUERFESTSTOFFE FUER ZEMENTDREHOEFEN" ZKG INTERNATIONAL, BAUVERLAG GMBH. WIESBADEN, DE, Bd. 44, Nr. 12, 1. Dezember 1991 (1991-12-01), Seiten 617-626, XP000237076 ISSN: 0949-0205

## Beschreibung

Die Erfindung betrifft einen großvolumigen Industrieofen mit einem feuerfesten Mauerwerk aus feuerfesten Steinen als Zustellung des großvolumigen Industrieofens, in dem mineralische Produkte wie Zement, Kalk, Magnesit, Dolomit oder dgl. unter im Wesentlichen oxidierender Atmosphäre bei Temperaturen über 700°C, insbesondere über 900°C, gebrannt werden.

Zement, Kalk, Magnesit und Dolomit werden großtechnisch hauptsächlich in Drehrohr- oder Schachtöfen gebrannt. Der Brennprozess wird im Wesentlichen oxidierend durchgeführt.

Die sog. Laufzeit der Öfen hängt u.a. auch von der Art der feuerfesten Ausmauerung ab, die zum einen den Metallmantel des Ofens vor der Einwirkung hoher Brenngut-, Flammen- und Atmosphärentemperaturen schützt und zum anderen Wärmeverluste herabsetzt. Zusätzlich kann das feuerfeste Futter als Wärmetauscher wirken, der Wärmeenergie aus den heißen Ofengasen aufnimmt und an das Brenngut abgibt.

Die Ofenausmauerung ist meist hohen Temperaturwechselbelastungen, hohen mechanischen und chemischen Beanspruchungen ausgesetzt. Die Temperaturwechselbelastungen resultieren aus der höheren Temperatur der Ofengase im Vergleich zur Temperatur des Brennguts. Mechanische Beanspruchungen werden durch Drehbewegungen des Ofens und durch Brenngutbewegungen bewirkt. Chemisch wird das Mauerwerk durch Bestandteile des Brennguts und durch volätile Verbindungen der Ofenatmosphäre beansprucht, die sich aufgrund von Temperaturgefällen in der feuerfesten Auskleidung abscheiden.

Die Zustellung bzw. Ausmauerung dieser oxidierend betriebenen Öfen, z.B. der Zement- und Kalkdrehöfen, der Dolomit- und Magnesitöfen und der Schachtöfen erfolgt mit gebrannten feuerfesten Steinen, und zwar im basischen Bereich im Wesentlichen mit feuerfesten Steinen auf Basis MgO, z.B. mit Magnesiaspinellsteinen, Magnesiachromitsteinen, Magnesiahercynitsteinen als Magnesiaspinellmineralsteine, Magnesiazirkoniasteinen, Dolomitsteinen oder dgl. und im nicht-basischen Bereich mit Schamottesteinen, Andalusitsteinen, Bauxitsteinen oder dgl.

Vereinzelt erfolgt eine Zustellung zonal bzw. zonar auch mal mit ungebrannten phosphor- oder phosphatgebundenen Feuerleichtsteinen.

Die Öfen werden ausmauerungstechnisch eingeteilt in verschiedene Zonen, weil die Zonen im Betrieb unterschiedlich belastet werden. Beim Zementdrehrohrofen unterscheidet man z.B. von der Brennguteinlaufseite zur Brenngutauslaufseite eine Vorwärmzone, Sicherheitszone, obere Übergangszone, Sinterzone, untere Übergangszone und Auslaufzone. In der Sinterzone bildet sich in der Regel ein stabiler Brenngutansatz, der diese Zone schützen kann. Abplatzungen des Ansatzes können Schäden verursachen, ebenso wie Zementklinkerphaseninfiltrationen bei Überhitzungen. Aufgrund fehlenden oder instabilen Ansatzes sind die Übergangszonen der Alkaliinfiltration, Temperatur- und Redoxeinflüssen sowie Temperaturwechseln ausgesetzt. Zusätzlich treten thermomechanische Belastungen z.B. durch Ovalitätsspannungen und Ofenachsverkrümmungen auf. Zudem erzeugen sog. Sekundärbrennstoffe, wie z.B. Autoreifen, zusätzliche unkontrollierbare Belastungen.

Die Vorwärm-, Sicherheitszone und Auslaufzone werden in der Regel mit schamotte- und tonerdereichen Steinen, die übrigen Zonen in der Regel mit Steinen auf der Basis von Magnesia (MgO) oder Doloma (MgO/ CaO) ausgekleidet.

Schachtöfen sind in der Regel ähnlich eingeteilt.

Bei gleichmäßigen Betriebsbedingungen leisten die bekannten Ofenauskleidungen die vorgegebenen Eigenschaften und schützen vor vorzeitigem Verschleiß. Gleichmäßige Betriebsbedingungen sind aber vielfach nicht zu gewährleisten. Häufig erfolgen in relativ kurzer Zeit Umstellungen von Ofenbetriebs- oder Stoffparametern, z.B. bezüglich der Klinkermoduli beim Zementbrennen oder eine erforderliche Sanierung von bereits aufgetretenen Schäden wird nicht zeitgerecht durchgeführt. Wechselnde chemische Angriffe sowie wechselnde thermische und thermomechanische . Belastungen führen zu beschleunigtem Verschleiß und zu Schäden.

Man hat in der Vergangenheit versucht, diesem Problem mit einer Verbesserung der stofflichen Zusammensetzung der gebrannten Steine zu begegnen und somit an ungünstige Betriebsbedingungen anzupassen. Diese anwendungsrelevante Optimierung beinhaltet im Wesentlichen eine Änderung der chemisch-mineralogischen Zusammensetzung der Steine mit dem Ziel z.B. der Erhöhung ihrer elastischen Eigenschaften und Korrosionsbeständigkeit. Ein Beispiel sind Magnesiaspinellsteine, die in der Regel eine höhere Elastizität gewährleisten als Magnesiachromitsteine. Andererseits unterliegen die Magnesiachromitsteine einer höheren Korrosion durch den Angriff von Zementklinkerphasen. Dem begegnete man mit Magnesiazirkoniasteinen, die wiederum spannungsempfindlich sind. Dementsprechend wurden diese Steine weiterentwickelt und Spezialsteine hergestellt, die für den jeweiligen Beanspruchungsfall konzipiert sind. Da aber die Beanspruchungsfälle vielfältig sind, ist diese Entwicklung sackgassenartig und sehr aufwändig.

Aufgabe der Erfindung ist, einen großvolumigen Industrieofen mit einem feuerfesten Mauerwerk für oxidierende Ofenatmosphären zu schaffen, das wesentlich besser Wechselbelastungen übersteht und dessen feuerfestes Steinmaterial optimal an die normalen Beanspruchungen und nicht an die Wechselbeanspruchungen angepasst ist.

Diese Aufgabe wird durch die Merkmale des Anspruchs 1 gelöst. Vorteilhafte Weiterbildungen der Erfindung werden in den UnterAnsprüchen gekennzeichnet.

Nach der Erfindung weist der Industrieofen ungebrannte feuerfeste Steine aus üblicherweise verwendetem Material, z.B. aus einem oben genannten feuerfesten Material mit üblicherweise verwendeten Raumformen auf, die phosphatgebunden sind oder deren Bindemittel ein Kunstharz, Teer oder Pech ist, oder die durch ein anderes geeignetes Bindemittel gebunden sind.

Wesentlich ist, dass an der zum Ofeninnenraum weisenden Seite der Ausmauerung bzw. der Steine im Steinmaterial, insbesondere in den Poren, Kohlenstoff, insbesondere Graphit, enthalten ist. Der Graphit kann ein natürlicher oder ein künstlicher Graphit, z.B. Flockengraphit sein. Es hat sich gezeigt, dass der Graphit mit dem Brenngut und/oder der oxidierenden Atmosphäre in allen Zonen offenbar eine Art Versiegelung der Oberfläche der ungebrannten Steine erzeugt, die nicht nur die gewünschten optimierten Eigenschaften bezüglich der unterschiedlichen Belastungen in diesen Zonen nicht stört, sondern auch bei Wechselbelastungen die vorgegebenen Eigenschaften gewährleistet. Besonders effektiv ist die Wirkung des Graphits in Kombination mit einem kohlenstoffhaltigen Bindemittel wie Kunstharz, Teer oder Pech, wobei die Wirkung ganz besonders gut ist, wenn Kunstharz vorliegt. Als Kunstharze werden insbesondere Phenolharze (Phenolresol) oder Phenolharz-Novolak-Lösungen verwendet.

Zweckmäßigerweise wird eine graphithaltige Zone von etwa 1 bis 18 cm, vorzugsweise 2 bis 15 cm, vorgesehen, die den Graphit zur oxidierenden Oberflächenreaktion mit dem Brenngut und/oder der Ofenatmosphäre zur Verfügung stellt und ggf. zudem im Innenraum des Steins Reservemengen an Graphit sowie ggf. an kohlenstoffhaltigen Bindemitteln vorhält. Die Versiegelungszone schützt offenbar den ofeninnenseitigen (heißseitigen) Oberflächenbereich der Steine derart, dass nicht der gesamte Graphit aus der graphithaltigen Zone verbraucht wird und bei eventuellen Beschädigungen an der Oberfläche zu einer weiteren Versiegelung zur Verfügung steht.

Die Porosität in der graphithaltigen Zone, vorzugsweise aber auch im gesamten ungebrannten Stein, beträgt zweckmäßigerweise weniger als 30 Vol.-%, vorzugsweise weniger als 14 Vol.-%, insbesondere liegt die Porosität zwischen 1 und 8.Vol.-%.

Der Graphitgehalt der graphithaltigen Zone beträgt vorzugsweise 2 bis 30 Gew.-%, insbesondere 5 bis 20 Gew.-%. Im Falle von kohlenstoffhaltigen Bindemitteln sollte der Kohlenstoffgehalt aus Bindemittel plus Graphit innerhalb der angegebenen Grenzen von 2 bis 30 Gew.-%, insbesondere von 5 bis 20 Gew.-%, liegen. Vorzugsweise wird das kohlenstoffhaltige Bindemittel in Mengen von 2 bis 5 Gew.-%, insbesondere von 2,5 bis 4 Gew.-%, verwendet.

Nach einer besonderen Ausführungsform der Erfindung enthält die graphithaltige Zone zusätzlich Antioxidantien, wie beispielsweise Al, Si, Mg, SiC, Si₃N₄, B₄C oder metallische Legierungen. Die Antioxidantien beeinträchtigen in überraschender Weise die Bildung der Versiegelungszone an der Oberfläche nicht, schützen jedoch vor einem zu tiefen Eindringen der Oxidation in die graphithaltige Zone, so dass Kohlenstoffreserven zur späteren Nachbildung von schadhaften Versiegelungsbereichen verbleiben.

Es liegt im Rahmen der Erfindung, Steine zu verwenden, die vollständig bzw. in ihrer Gesamtheit bzw. durch und durch graphithaltig sind. Es liegt ebenfalls im Rahmen der Erfindung, insbesondere Steine zu verwenden, die vollständig graphithaltig sind und durch kohlenstoffhaltige Bindemittel wie Kunstharz, Teer oder Pech gebunden sind. Insofern sieht die Erfindung vor, an sich bekannte basische, kohlenstoffhaltige feuerfeste Steine für das Mauerwerk oxidierend betriebener Öfen zu verwenden, die für den Einsatz in reduzierender Atmosphäre, z.B. für den Einsatz bei der Stahlerzeugung, konzipiert worden sind. Derartige basische feuerfeste Steine werden z.B. zur Auskleidung metallurgischer Gefäße wie Konvertern, Stählgießpfannen oder Elektrolichtbogenöfen eingesetzt. Diese ebenfalls ungebrannten kohlenstoffhaltigen Steine, insbesondere Magnesiasteine oder Dolomitsteine, gewährleisten Kompatibilität mit den meisten basischen Schlacken und die Stabilität des Kohlenstoffs, insbesondere auch des Graphits, in der reduzierenden Atmosphäre, die bei der Stahlerzeugung vorherrscht. Die Steine werden mit Kunstharz, Pech oder Teer gebunden und im kalten Zustand (phenolharzgebundene oder phenolharz-novolak-gebundene Steine) oder im heißen Zustand (phenolharz-novolak-gebundene oder teer- oder pechgebundene Steine) geformt. Die Steine weisen zudem in der Regel Antioxidantien auf, die aufgrund ihrer gegenüber Kohlenstoff höheren Sauerstoffaffinität den Kohlenstoffabbrand vermindern. Die Wirkung der Antioxidantien beruht hauptsächlich auf einer Erschwerung des Gaszutritts und auf einer Erhöhung der Festigkeit. Typischerweise werden Metalle, Carbide oder Nitride, beispielsweise Al, Mg, Si, SiC, B₄C, Si₃N₄, AIN, BN oder auch SiAlON verwendet.

Im Rahmen der Erfindung wird von der bekannten Technologie der Herstellung solcher kohlenstoffhaltiger Steine Gebrauch gemacht, indem erfindungsgemäß verwendete Steine mit der entsprechenden Technologie hergestellt werden.

Die Versiegelungszone verhindert insbesondere auch in Kombination mit einer geringen Porosität des ungebrannten Steinmaterials die Infiltration von flüchtigen Komponenten aus der Ofenatmosphäre, z.B. von Alkaliverbindungen, Chlorverbindungen und Schwefelverbindungen, die das Mauerwerk schädigen oder zerstören können.

Des Weiteren wird durch die Versiegelungszone und insbesondere auch durch eine geringe Porosität die thermochemische Beständigkeit gegen den Angriff von z.B. Zementklinkerphasen in hohem Maße gewährleistet.

Hinzu kommt, dass der Gehalt an Graphit insbesondere in Kombination mit kohlenstoffhaltigen Bindemitteln einen erwünscht niedrigen Elastizitätsmodul E und entsprechend einen erwünscht niedrigen Schubmodul G bewirkt.

Im Falle der Rohstoffkomponenten MgO und Kohlenstoff sind die graphithaltigen Zonen bzw. die Steine thermisch sehr beständig. Auch ein teilweiser oder vollständiger Austausch des MgO gegen andere feuerfeste Minerale wie Spinelle, Korund, Bauxit, Andalusit, Mullit, Flintclay, Schamotte beeinträchtigt die Versiegelungswirkung nicht.

Die oxidierende Atmosphäre erzeugt in überraschender Weise an der Steinheißseite des Mauerwerks nur einen minimalen Kohlenstoffausbrand, wobei die dabei auftretende Veraschung in ebenfalls überraschender Weise zu einer Art Versiegelungszone an der Steinoberfläche, wahrscheinlich durch Sintervorgänge an der Steinoberfläche, führt, ohne dass andere materialmäßig vorgegebenen Eigenschaften der Steine verloren gehen. In der Sinterzone und ggf. auch in den Übergangszonen bilden sich die erwünschten Ansätze schneller und dauerhafter. Abplatzungen sind selbst bei Überhitzungen und Wechselbelastungen seltener.

Erfindungsgemäß werden für die heißen Ofenzonen wie die Sinter- und Übergangszonen, z.B. von Drehrohr- oder Schachtöfen, Steine eingesetzt, die dem Angriff der heißen Zementklinkerphasen widerstehen können, z.B. Steine auf Basis MgO und Graphit. Diese enthalten zweckmäßigerweise die genannten Antioxidantien, die den Abbrand des Kohlenstoffs steuern. Die Antioxidantien erhöhen zudem die Festigkeit des Steins an der Einsatzseite. Die Steine können neben Magnesia (Sintermagnesia oder Schmelzmagnesia) auch Spinell, Bauxit oder Korund enthalten, oder Magnesia kann durch diese Minerale vollständig ersetzt sein, und zwar insbesondere dann, wenn die Wärmeleitfähigkeit herabgesetzt werden soll.

Die Steine werden nicht nur für die heißen Zonen der Drehrohr- und Schachtöfen, sondern zweckmäßigerweise auch für alle anderen Zonen verwendet. Beispielsweise wird die Sicherheitszone mit kohlenstoffhaltigen Steinen zugestellt, die als tonerdehaltigen Bestandteil Andalusit oder ein anderes Mineral der Sillimanitgruppe, Bauxit oder eine tonerdereiche Spezialschamotte enthalten. Der Kohlenstoffgehalt der Steine sollte auch in diesem Fall zwischen 2 und 30 Gew.-% liegen. Auch diese Steine können Antioxidantien zum angegebenen Zweck enthalten.

Für die Vorwärmzone der Öfen, die bisher üblicherweise mit Schamottesteinen zugestellt wurde, ist erfindungsgemäß ein Einsatz von kohlenstoffhaltigen Schamottesteinen vorgesehen, die vorzugsweise wie die anderen Steine ebenfalls kunstharz-, teer- oder pechgebunden sind. Diese Steine können aber auch auf andere Weise organisch oder anorganisch gebunden sein und Antioxidantien zum oben angegebenen Zweck enthalten.

Der Ofenauslauf, der bisher mit gebrannten Bauxitsteinen zugestellt wurde, wird erfindungsgemäß vorzugsweise mit kohlenstoffhaltigen tonerdereichen Steinen, beispielsweise Bauxitsteinen, oder mit kohlenstoffhaltigen Magnesiasteinen zugestellt, die Antioxidantien enthalten, insbesondere um eine höhere Festigkeit wegen der im Ofenauslauf auftretenden Abrasionsbeanspruchung zu gewährleisten.

Sollten bei einem Einsatz die Temperaturen an der Außenseite des Brennaggregats, dem sog. Ofenmantel, zu hoch werden, so besteht die Möglichkeit der Zustellung mit einem sog. Zweischichtenmauerwerk. Dieses Mauerwerk besteht auf der Heißseite aus den beschriebenen kohlenstoffhaltigen Steinen, gekennzeichnet durch ihren Gehalt an feuerfesten Mineralen, Graphit und ggf. Antioxidantien und auf der ofenmantelseitigen Seite aus einem isolierenden Mauerwerk, bestehend beispielsweise aus einem handelsüblichen Schamottestein oder einem anderen thermisch isolierenden Werkstoff, beispielsweise einer Leichtschamotte.

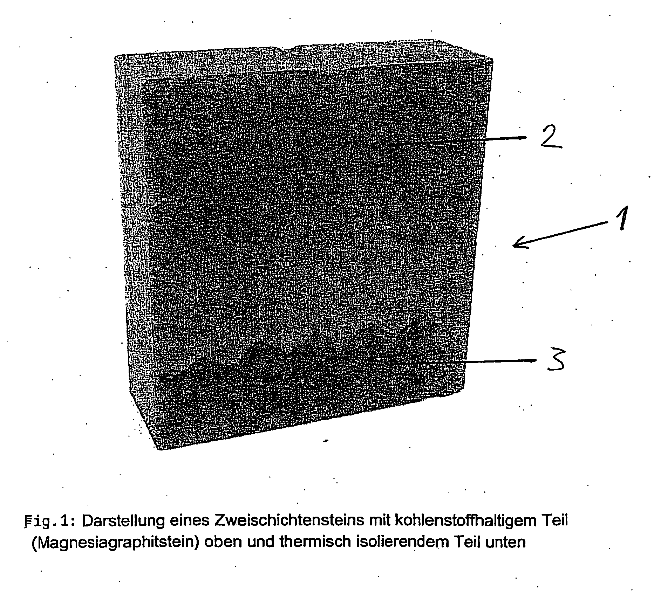

Die Steine enthalten heißseitig zonal Graphit. Die Kaltseite des Steins kann z. B. aus dem gleichen Material ohne Graphit oder einem wärmeisolierenden Material bestehen. Fig. 1 zeigt einen solchen Aufbau, wobei der Zweischichtstein 1 aus der graphithaltigen heißseitigen Zone 2 und der kaltseitigen Isolierzone 3 besteht. Diese Steine können in einem Arbeitsgang hergestellt werden und weisen eine dauerhafte Bindung zwischen den beiden Zonen auf. Selbstverständlich kann aber auch der isolierende Teil und der kohlenstoffhaltige Teil nach jeweils separater Fertigung zur Erleichterung beim Einbau mit einem Kleber an den kohlenstoffhaltigen Teil angeklebt werden.

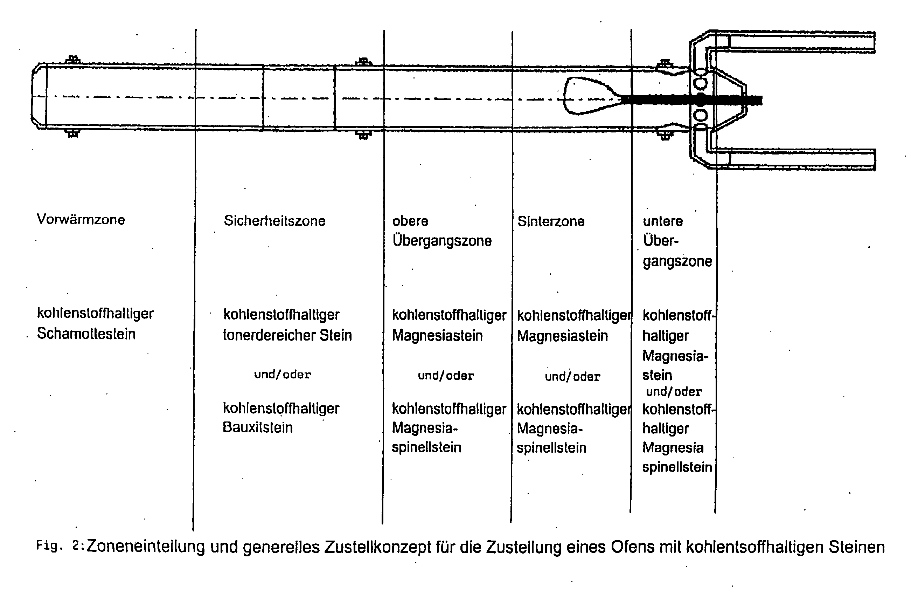

Fig. 2 zeigt schematisch ein Zustellbeispiel für einen Zementdrehrohrofen. Demnach sind die Vorwärmzone mit kohlenstoffhaltigen Schamottesteinen, die Sicherheitszone mit kohlenstoffhaltigen tonerdereichen Steinen und/oder kohlenstoffhaltigen Bauxitsteinen, die obere Übergangszone mit kohlenstoffhaltigen Magnesiasteinen und/oder kohlenstoffhaltigen Magnesiaspinellsteinen, die Sinterzone mit kohlenstoffhaltigen Magnesiasteinen und/oder kohlenstoffhaltigen Magnesiaspinellsteinen und die untere Übergangszone mit kohlenstoffhaltigen Magnesiasteinen und/oder kohlenstoffhaltigen Magnesiaspinellsteinen zugestellt. Fig. 2 zeigt das Drehrohr 4, die Feuerungsflamme 5 und den Brenner 6.

Anhand der folgenden Zustellbeispiele für ein feuerfestes Mauerwerk wird die Erfindung im Folgenden näher erläutert.

### Beispiel 1: Drehrohrofen

Es wird von einem Zementdrehrohrofen ausgegangen, in dem unter typischen Betriebsbedingungen ein Portlandzementklinker gebrannt wird. Die Länge des Ofens ist 75 m, der Durchmesser 4,50 m. Die Zoneneinteilung entsprechend Fig. 2 ist wie folgt:

| | | |
|---|---|---|
| Auslaufzone | OP | 0 - 5 m |
| Untere Übergangszone | OP | 5 - 12 m |
| Sinterzone | OP | 12 - 30 m |
| Obere Übergangszone | OP | 30 - 43 m |
| Sicherheitszone | OP | 43 - 52 m |
| Vorwärmzone | OP | 52 - 75 m |
| | OP = Ofenpunkt (in laufenden Metern) | |

Eine erfindungsgemäße Zustellung ergibt sich wie folgt:

| | | |
|---|---|---|
| Auslaufzone | OP | 0 - 5 m |

Die Zustellung erfolgt mit einem Magnesiastein mit einem Graphitanteil von 10 Gew.-%; die Zusammensetzung dieses Steins ist wie folgt:

| | |
|---|---|
| Sintermagnesiakörnung 0-4 mm | 71 Gew.-% |
| Sintermagnesiamehl < 0,1 mm | 13 Gew.-% |
| Flockengraphit | 10 Gew.-% |
| Aluminiumpulver | 3 Gew.-% |
| Siliciumpulver | 3 Gew.-% |

Bindemittel ist Phenolresol, das in einer Menge von 3,2 Gew.-% zum Trockengemenge zugesetzt wird. Der Stein wird in den üblichen Formaten für die Zementindustrie (sogenannten VDZ-Formaten) mit einem Pressdruck von 160 MPa gepresst und anschließend bei einer Temperatur von 200 °C getempert.

Der Einbau der Steine erfolgt mit den Installationswerkzeugen und -verfahren, wie sie in der Zementindustrie üblich sind.

| | | |
|---|---|---|
| Untere Übergangszone | OP | 5 - 12 m |

Die Zustellung erfolgt mit einem Magnesiastein mit einem Graphitanteil von 10 Gew.-%; die Zusammensetzung dieses Steins ist wie folgt:

| | |
|---|---|
| Schmelzmagnesiakörnung 0-4 mm | 71 Gew.-% |
| Schmelzmagnesiamehl < 0,1 mm | 13 Gew.-% |
| Flockengraphit | 10 Gew.-% |
| Aluminiumpulver | 3 Gew.-% |
| Siliciumpulver | 3 Gew.-% |

Bindemittel ist Phenolresol, das in einer Menge von 3,1 Gew.-% zugesetzt wird. Der Stein wird in den üblichen Formaten für die Zementindustrie (sog. VDZ-Formaten) mit einem Pressdruck von 160 MPa gepresst und anschließend bei einer Temperatur von 200 °C getempert. In diesem Fall wird Schmelzmagnesia verwendet, da üblicherweise die Beanspruchungen in der unteren Übergangszone am höchsten sind. Bei niedrigeren Beanspruchungen ist auch der Einsatz von Sintermagnesia möglich.

Der Einbau der Steine erfolgt auch hier mit den Installationswerkzeugen und -verfahren, wie sie in der Zementindustrie üblich sind.

| | | |
|---|---|---|
| Sinterzone | OP | 12 - 30 m |

Die Zustellung erfolgt mit einem Magnesiastein mit einem Graphitanteil von 10 Gew.-%; die Zusammensetzung dieses Steins ist wie folgt:

| | |
|---|---|
| Sintermagnesiakörnung 0-4 mm | 48 Gew.-% |
| Sintermagnesiamehl < 0,1 mm | 13 Gew.-% |
| Sinterspinell 0-4 mm | 20 Gew.-% |
| Flockengraphit | 10 Gew.-% |
| Aluminiumpulver | 3 Gew.-% |
| Siliciumpulver | 3 Gew.-% |
| Siliciumcarbidpulver | 3 Gew.-% |

Bindemittel ist Phenolresol, das in einer Menge von 3,1 Gew.-% zugesetzt wird. Der Stein wird in den üblichen Formaten für die Zementindustrie (sog. VDZ-Formaten) mit einem Pressdruck von 160 MPa gepresst und anschließend bei einer Temperatur von 200 °C getempert. In diesem Fall wird zusätzlich Sinterspinell verwendet, um eine Ansatzbildung zu unterstützen und gleichzeitig die Wärmeleitfähigkeit der Zustellung zu senken. Selbstverständlich ist auch die Verwendung von Schmelzmagnesia und Schmelzspinell möglich. Aluminiumpulver; Siliciumpulver und Siliciumcarbidpulver dienen als Antioxidantien zur Steuerung der Versiegelung und zur Gefügeverstärkung.

Der Einbau der Steine erfolgt auch hier mit den Installationswerkzeugen und -verfahren, wie sie in der Zementindustrie üblich sind.

| | | |
|---|---|---|
| Obere Übergangszone | OP | 30 - 43 m |

Die Zustellung erfolgt in diesem Ausführungsbeispiel mit einem Magnesiastein mit einem Graphitanteil von 10 Gew.-%; die Zusammensetzung dieses Steins ist wie folgt:

| | |
|---|---|
| Sintermagnesiakörnung 0-4 mm | 48 Gew.-% |
| Sintermagnesiamehl < 0,1 mm | 13 Gew.-% |
| Schmelzkorund 0-4 mm | 20 Gew.-% |
| Flockengraphit | 10 Gew.-% |
| Aluminiumpulver | 3 Gew.-% |
| Siliciumpulver | 3 Gew.-% |
| Siliciumcarbidpulver | 3 Gew.-% |

Bindemittel ist Phenolresol, das in einer Menge von 3,2 Gew.-% zugesetzt wird. Der Stein wird in VDZ-Formaten mit einem Pressdruck von 160 MPa gepresst und anschließend bei einer Temperatur von 200 °C getempert. In diesem Fall wird zusätzlich Schmelzkorund verwendet, um die Wärmeleitfähigkeit der Zustellung zu senken. Selbstverständlich ist auch die Verwendung von Sinterkorund möglich. Aluminiumpulver, Siliciumpulver und Siliciumcarbidpulver dienen als Antioxidantien zur Regelung der Versiegelung und zur Gefügeverstärkung.

Der Einbau der Steine erfolgt entsprechend den anderen Steinen.

| | | |
|---|---|---|
| Sicherheitszone | OP | 43 - 52 m |

Die Zustellung erfolgt in diesem Ausführungsbeispiel mit einem tonerdereichen Stein mit einem Graphitanteil von 10 Gew.-%; die Zusammensetzung dieses Steins ist wie folgt:

| | |
|---|---|
| Flintclay 0-4 mm | 68 Gew.-% |
| Flintclaymehl < 0,1 mm | 13 Gew.-% |
| Flockengraphit | 10 Gew.-% |
| Aluminiumpulver | 3 Gew.-% |
| Siliciumpulver | 3 Gew.-% |
| Siliciumcarbidpulver | 3 Gew.-% |

Bindemittel ist Phenolresol, das in einer Menge von 3,4 Gew.-% zugesetzt wird. Der Stein wird in sog. A-Formaten (ISO-Formaten) mit einem Pressdruck von 160 MPa gepresst und anschließend bei einer Temperatur von 200 °C getempert. Aluminiumpulver, Siliciumpulver und Siliciumcarbidpulver dienen als Antioxidantien zur Regelung der Versiegelung und zur Gefügeverstärkung. Siliciumcarbid erhöht zusätzlich die Beständigkeit gegen Alkaliangriff.

Der Einbau der Steine erfolgt entsprechend den anderen Steinen.

| | | |
|---|---|---|
| Vorwärmzone | OP | 52 - 75 m |

Die Zustellung erfolgt in diesem Ausführungsbeispiel mit einem Leichtschamottestein mit einem Graphitanteil von 10 Gew.-%; die Zusammensetzung dieses Steins ist wie folgt:

| | |
|---|---|
| Leichtschamotte 0-4 mm | 68 Gew.-% |
| Leichtschamottemehl < 0,1 mm | 13 Gew.-% |
| Flockengraphit | 10 Gew.-% |
| Aluminiumpulver | 3 Gew.-% |
| Siliciumpulver | 3 Gew.-% |
| Siliciumcarbidpulver | 3 Gew.-% |

Bindemittel ist Phenolresol, das in einer Menge von ca. 3,8 Gew.-% zugesetzt wird. Der Stein wird in sog. A-Formaten (ISO-Formaten) mit einem Pressdruck von 120 MPa gepresst und anschließend bei einer Temperatur von 200 °C getempert. Aluminiumpulver, Siliciumpulver und Siliciumcarbidpulver dienen als Antioxidantien zur Regelung der Versiegelung und zur Gefügeverstärkung. Siliciumcarbidpulver erhöht zusätzlich die Beständigkeit gegen Alkaliangriff. Der Pressdruck wird hier niedriger gewählt, da eine hohe Verdichtung für Steine in diesem Bereich nicht notwendig ist. Im Einzelfall, etwa bei einer hohen Belastung durch Alkalien aus der Ofenatmosphäre, ist selbstverständlich auch ein höher verdichteter Stein problemlos einsetzbar.

Der Einbau der Steine erfolgt entsprechend den bisher beschriebenen Steinen.

### Beispiel 2: Schachtofen

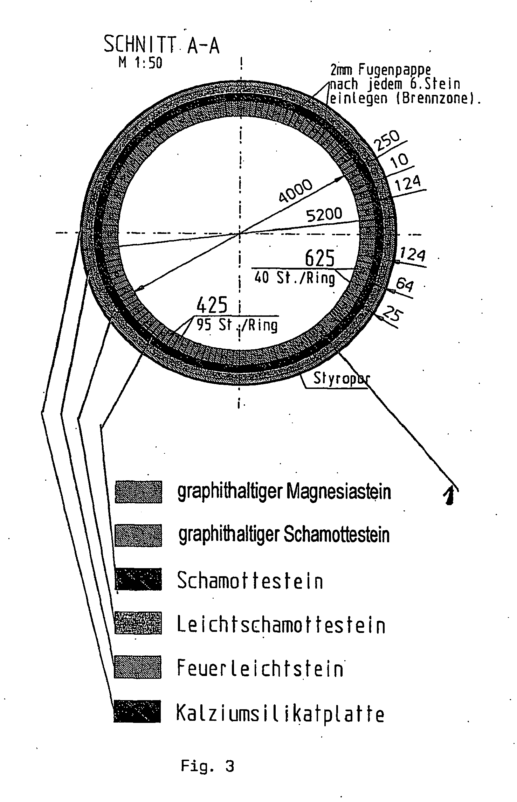

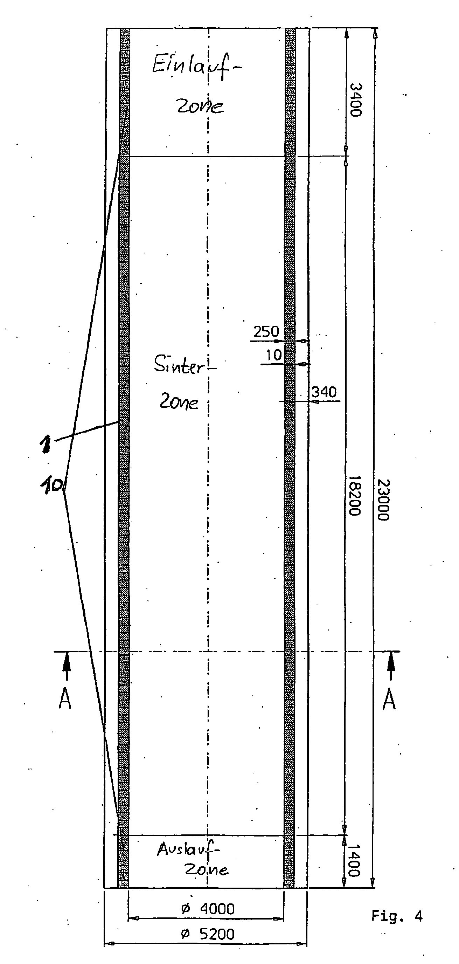

Es wird von einem Kalkschachtofen ausgegangen, der im Querschnitt in Fig. 3 abgebildet ist und in dem untertypischen Betriebsbedingungen ein Kalkstein zur Erzeugung von CaO gebrannt wird. Die Höhe des Ofens ist 23 m, der Innendurchmesser 4,00 m, der Außendurchmesser 5,20 m. Die Zoneneinteilung entsprechend Fig. 4 ist wie folgt (Ofenpunkte von unten gezählt):

| | | |
|---|---|---|
| Einlauf-(Vorwärm-)zone | OP | 19,6 - 23 m |
| Sinterzone | OP | 1,4 - 19,6 m |
| Auslauf-(Abkühl-)zone | OP | 0 - 1,4 m |

Generell wird zur thermischen Isolierung der Schachtofen direkt am Ofenmantel mit einer Calciumsilicatplattenzustellung (Stärke 25 mm) versehen, Richtung Ofeninneres schließt sich eine Feuerleichtsteinzustellung an (Stärke 64 mm), anschließend folgt eine Zustellung mit einem Feuerleichtstein (Stärke 124 mm, typische Dichte 1,50-1,65 g/cm³), daran anschließend eine Zustellung mit einem typischen Schamottestein (Stärke 124 mm, typische Dichte 2,0-2,30 g/cm³), und im Inneren befindet sich das Arbeitsfutter aus erfindungsgemäß angewendeten graphithaltigen Steinen. Zur Dehnungskompensation ist zwischen graphithaltigen Steinen und Schamottesteinen eine Schicht aus Styropor vorgesehen.

| | | |
|---|---|---|
| Einlauf-(Vorwärm-) zone | OP | 19,6 - 23 m |

Die Zustellung erfolgt in diesem Ausführungsbeispiel mit einem Schamottestein mit einem Graphitanteil von 10 %; die Zusammensetzung dieses Steins ist also wie folgt:

| | |
|---|---|
| Schamotte 0-4 mm | 68 Gew.-% |
| Schamottemehl < 0,1 mm | 13 Gew.-% |
| Flockengraphit | 10 Gew.-% |
| Aluminiumpulver | 3 Gew.-% |
| Siliciumpulver | 3 Gew.-% |
| Siliciumcarbidpulver | 3 Gew.-% |

Bindemittel ist Phenolresol, das in einer Menge von ca. 3,5 Gew.-% zugesetzt wird. Der Stein wird in sogenannten A-Formaten (ISO-Formaten) mit einem Pressdruck von 120 MPa gepresst und anschließend bei einer Temperatur von 200 °C getempert. Aluminiumpulver, Siliciumpulver und Siliciumcarbidpulver dienen als Antioxidantien und zur Gefügeverstärkung. Siliciumcarbidpulver erhöht zusätzlich die Beständigkeit gegen einen möglichen Alkaliangriff. Der Pressdruck wird hier niedriger gewählt, da eine hohe Verdichtung für Steine in diesem Bereich nicht notwendig ist. Im Einzelfall, etwa bei einer hohen Belastung durch Alkalien aus der Ofenatmosphäre, ist selbstverständlich auch ein höher verdichteter Stein problemlos einsetzbar.

Der Einbau der Steine erfolgt mit den Installationswerkzeugen und -verfahren, wie sie in der Kalkindustrie üblich sind.

| | | |
|---|---|---|
| Sinterzone | OP | 1,4 - 19,6 m |

Die Zustellung erfolgt in diesem Ausführungsbeispiel mit einem Magnesiastein 1 mit einem Graphitanteil von 10 %; die Zusammensetzung dieses Steins ist also wie folgt:

| | |
|---|---|
| Sintermagnesiakörnung 0-4 mm | 71 Gew.-% |
| Sintermagnesiamehl < 0,1 mm | 13 Gew.-% |
| Flockengraphit | 10 Gew.-% |
| Aluminiumpulver | 3 Gew.-% |
| Siliciumpulver | 3 Gew.-% |

Bei erhöhten Belastungen, beispielsweise durch Abriebbeanspruchung, kann anstelle von Sintermagnesia auch Schmelzmagnesia verwendet werden. Bindemittel ist Phenolresol, das in einer Menge von 3,2 Gew.-% zugesetzt wird. Der Stein wird in sogenannten A-Formaten (ISO-Formaten) mit einem Pressdruck von 160 MPa gepresst und anschließend bei einer Temperatur von 200 °C getempert.

Der Einbau der Steine erfolgt mit den Installationswerkzeugen und -verfahren, wie sie in der Kalkindustrie üblich sind.

| | | |
|---|---|---|
| Auslauf-(Abkühl-)zone | OP | 0 - 1,4 m |

Die Zustellung erfolgt in diesem Ausführungsbeispiel ebenfalls mit einem Schamottestein (wie in der Einlauf-(Vorwärm-)zone) mit einem Graphitanteil von 10 Gew. -%; die Zusammensetzung dieses Steins ist also wie folgt:

| | |
|---|---|
| Schamotte 0-4 mm | 68 Gew.-% |
| Schamottemehl < 0,1 mm | 13 Gew.-% |
| Flockengraphit | 10 Gew.-% |
| Aluminiumpulver | 3 Gew.-% |
| Siliciumpulver | 3 Gew.-% |
| Siliciumcarbidpulver | 3 Gew.-% |

Bindemittel ist Phenolresol, das in einer Menge von ca. 3,5 Gew.-% zugesetzt wird. Der Stein wird in sogenannten A-Formaten (ISO-Formaten) mit einem Pressdruck von 120 MPa gepresst und anschließend bei einer Temperatur von 200 °C getempert. Aluminiumpulver, Siliciumpulver und Siliciumcarbidpulver dienen als Antioxidantien und zur Gefügeverstärkung. Siliciumcarbidpulver erhöht zusätzlich die Beständigkeit gegen einen möglichen Alkaliangriff. Der Pressdruck wird hier niedriger gewählt, da eine hohe Verdichtung für Steine in diesem Bereich nicht notwendig ist. Im Einzelfall, etwa bei einer hohen Belastung durch Abrasion, ist selbstverständlich auch ein höher verdichteter Stein problemlos einsetzbar.

Der Einbau erfolgt mit den Installationswerkzeugen und -verfahren, wie sie in der Kalkindustrie üblich sind.

Bevorzugt werden feuerfeste Steine folgender Zusammensetzungen:

| | | |
|---|---|---|
| Magnesia | 25 - 98, insb. | 27 - 83 Gew. -% |
| Spinellmineral oder Korund | 0 - 4.0, insb. | 5 - 30 Gew.-% |
| Graphit | 2 - 30, insb. | 5 - 20 Gew.-% |
| Aluminiumpulver | 0 - 10, insb. | 2 - 8 Gew.-% |
| Siliciumpulver | 0 - 10, insb. | 2 - 8 Gew.-% |
| Siliciumcarbidpulver | 0 - 10, insb. | 3 - 7 Gew.-% |
| Tonerdereiche Schamotte | 50 - 98, insb. | 57 - 88 Gew.-% |
| Graphit | 2 - 30, insb. | 5 - 20 Gew.-% |
| Aluminiumpulver | 0 - 10, insb. | 2 - 8 Gew.-% |
| Siliciumpulver | 0 - 10, insb. | 2 - 8 Gew.-% |
| Siliciumcarbidpulver | 0 - 10, insb. | 3 - 7 Gew.-% |
| | | |
| Leichtschamotte | 50 - 98, insb. | 57 - 88 Gew.-% |
| Graphit | 2 - 30, insb. | 5 - 20 Gew.-% |
| Aluminiumpulver | 0 - 10, insb. | 2 - 8 Gew.-% |
| Siliciumpulver | 0 - 10, insb. | 2 - 8 Gew.-% |
| Siliciumcarbidpulver | 0 - 10, insb. | 3 - 7 Gew.-% |

## Patentansprüche

1. Großvolumiger Industrieofen, in dem in im wesentlichen oxidierender Ofenatmosphäre mineralische Produkte bei Temperaturen über 700°C , z. B. Zement, Kalk, Magnesit, Dolomit od. dgl. gebrannt werden, wobei der Industrieofen ein Mauerwerk aus ungebrannten Steinen aus feuerfestem Material aufweist und die Steine im Innern im feuerseitigen bzw. heißseitigen Oberflächenbereich des Mauerwerks 2 bis 30 Gew.-% Kohlenstoff enthalten, wobei der Kohlenstoff in Form von Graphit und in Form von kohlenstoffhaltigem Bindemittel enthalten ist, wobei kohlenstoffhaltiges Bindemittel in Mengen von 2 bis 5 Gew.-% enthalten ist.

2. Industrieofen nach Anspruch 1,
**gekennzeichnet durch** Steine aus üblicherweise für derartige Öfen verwendetem feuerfesten Material, die im Bereich der für die Feuerseite des Mauerwerks vorgesehenen Oberfläche zonal Kohlenstoff, insbesondere in einer 1. bis 18 cm, vorzugsweise 2 bis 15 cm dicken Zone, aufweisen.

3. Industrieofen nach Anspruch 1 und/oder 2,
**dadurch gekennzeichnet, dass** die Steine die üblicherweise verwendeten Formate aufweisen.

4. Industrieofen nach einem oder mehreren der Ansprüche 1 bis 3,
**dadurch gekennzeichnet, dass** die Steine den Kohlenstoff in Form von natürlichem oder künstlichem Graphit enthalten.

5. Industrieofen nach Anspruch 4,
**dadurch gekennzeichnet, dass** die Steine Flockengraphit enthalten.

6. Industrieofen nach Anspruch 4 und/oder 5,
**dadurch gekennzeichnet, dass** das Bindemittel Teer und/oder Pech ist.

7. Industrieofen nach Anspruch 4 und/oder 5,
**dadurch gekennzeichnet, dass** die Steine als Bindemittel Kunstharz enthalten.

8. Industrieofen nach Anspruch 7,
**dadurch gekennzeichnet, dass** die Steine als Bindemittel Phenolharz enthalten.

9. Industrieofen nach Anspruch 7,
**dadurch gekennzeichnet, dass** die Steine als Bindemittel Phenolharz-Novolak enthalten.

10. Industrieofen nach einem oder mehreren der Ansprüche 1 bis 9,
**dadurch gekennzeichnet, dass** die Steine in der kohlenstoffhaltigen Zone Graphit in Mengen von 5 bis 20 Gew.-% enthalten.

11. Industrieofen nach einem oder mehreren der Ansprüche 1 bis 10,
**dadurch gekennzeichnet, dass** die Steine das kohlenstoffhaltige Bindemittel in Mengen von 2,5 bis 4 Gew.-% enthalten.

12. Industrieofen nach Anspruch 1 sowie einem oder mehreren der Ansprüche 1 bis 11,
**dadurch gekennzeichnet, dass** der Kohlenstoff homogen verteilt im gesamten Stein enthalten ist.

13. Industrieofen nach Anspruch 12,
**dadurch gekennzeichnet, dass** das Mauerwerk aus Steinen aus insbesondere basischem feuerfesten Material, insbesondere auf Basis von MgO ausgebildet ist.

14. Industrieofen nach Anspruch 13,
**dadurch gekennzeichnet, dass** das Mauerwerk aus Steinen ausgebildet ist, in denen MgO zumindest teilweise ausgetauscht ist gegen Spinell und/oder Korund und/oder Bauxit und/oder Andalusit und/oder Mullit und/oder Flintclay und/oder Schamotte.

15. Industrieofen nach einem oder mehreren der Ansprüche 1 bis 14,
**dadurch gekennzeichnet, dass** die Steine eine Porosität von weniger als 30 Vol.-%, insbesondere weniger als 14 Vol.-%, vorzugsweise eine Porosität zwischen 1 und 8 Vol.-% aufweisen.

16. Industrieofen nach einem oder mehreren der Ansprüche 1 bis 15,
**dadurch gekennzeichnet, dass** die Steine an sich bekannte Antioxidantien, insbesondere in Mengen von 1 bis 10 Gew.-%, vorzugsweise in Mengen von 2 bis 8 Gew.-% aufweisen.

17. Industrieofen nach einem oder mehreren der Ansprüche 1 bis 16 mit einem Mauerwerk in einer Sinterzone und/oder oberen Übergangszone eines Drehrohrofens oder Schachtofens, **dadurch**
**gekennzeichnet, dass** das Maverwerk kohlenstoffhaltige Steine auf Basis MgO oder MgO/Spinellmineral oder MgO/Bauxit oder MgO/Korund oder MgO/Zirkonoxid aufweist.

18. Industrieofen nach Anspruch 17,
**dadurch gekennzeichnet, dass** die Steine die folgende Zusammensetzung aufweisen:
| | | |
|---|---|---|
| Magnesia | 25 - 98, insb. | 27-83 Gew.-% |
| Spinellmineral | 0 - 4 0, insb. | 5 - 3 0 Gew.-% |
| Graphit | 2 - 30, insb. | 5 - 20 Gew.-% |
| Aluminiumpulver. | 0 - 10, insb. | 2 - 8 Gew.-% |
| Siliciumpulver | 0 - 10, insb. | 2 - 8 Gew.-% |
| Siliciumcarbidpulver | 0 - 10, insb. | 3 - 7 Gew.-% |
| Bindemittel | 2 - 5, insb. | 2, 5 - 4 Gew.-% |

19. Industrieofen nach Anspruch 17,
**gekennzeichnet durch** kohlenstoffhaltige Steine auf Basis Spinell oder Bauxit oder Korund.

20. Industrieofen nach einem oder mehreren der Ansprüche 1 bis 19 mit einem Mauerwerk in einer Sicherheitszone eines Drehrohrofens oder Schachtofens, **dadurch**
**gekennzeichnet, dass** das Mauerwerk kohlenstoffhaltige Steine auf Basis Andalusit oder eines Minerals der Sillimanitgruppe oder Bauxit oder tonerdereiche Schamotte wie Flintclay aufweist.

21. Industrieofen nach Anspruch 20,
**gekennzeichnet durch**
Steine der folgenden Zusammensetzung:
| | | |
|---|---|---|
| Tonerdereiche Schamotte | 50 - 98, insb. | 57 - 88 Gew.-% |
| Graphit | 2 - 30, insb. | 5 - 20 Gew.-% |
| Aluminiumpulver | 0 - 10, insb. | 2 - 8 Gew. -% |
| Siliciumpulver | 0 - 10, insb. | 2 - 8 Gew.-% |
| Siliciumcarbidpulver | 0 - 10, insb. | 3 - 7 Gew. -% |
| Bindemittel | 2 - 5, insb. | 2,5 - 4 Gew. -% |

22. Industrieofen nach einem oder mehreren der Ansprüche 1 bis 21 mit einem Mauerwerk in einer Vorwärmzone eines Drehrohrofens oder Schachtofens, **dadurch**
**gekennzeichnet, dass** das Mauerwerk kohlenstoffhaltige Steine auf Basis Schamotte oder Leichtschamotte aufweist.

23. Industrieofen nach Anspruch 22,
**gekennzeichnet durch**
Steine der folgenden Zusammensetzung:
| | | |
|---|---|---|
| Leichtschamotte | 50 - 98, insb. | 57 - 88 Gew.-% |
| Graphit | 2 - 30, insb. | 5 - 20 Gew.-% |
| Aluminiumpulver | 0 - 10, insb. | 2 - 8 Gew.-% |
| Siliciumpulver | 0 - 10, insb. | 2 - 8 Gew.- % |
| Siliciumcarbidpulver | 0 - 10, insb. | 3 - 7 Gew.-% |
| Bindemittel | 2 - 5, insb. | 2,5 - 4 Gew.-% |

24. Industrieofen nach einem oder mehreren der Ansprüche 1 bis 23 mit einem Mauerwerk in einer unteren Übergangszone oder in einer Auslaufzone eines Drehrohrofens oder Schachtofens, **dadurch**
**gekennzeichnet, dass** das Mauerwerk kohlenstoffhaltige Steine auf Basis Bauxit oder Magnesia aufweist.

25. Industrieofen nach einem oder mehreren der Ansprüche 1 bis 24,
**gekennzeichnet durch**
ein Mehrschichtmauerwerk, in dem heißseitig die kohlenstoffhaltigen Steine und kaltseitig Steine aus isolierendem Material, z.B. Feuerleichtsteine oder Schamottesteine, angeordnet sind.

## Claims

1. Large-volume industrial furnace in which mineral products, e.g. cement, lime, magnesite, dolomite or the like, are fired in an essentially oxidizing furnace atmosphere at temperatures above 700°C, wherein the industrial furnace comprises masonry composed of unfired bricks of refractory material and the bricks in the interior in the fire-side or hot-side surface region of the masonry contain from 2 to 30% by weight of carbon, with the carbon being present in the form of graphite and in the form of carbon-containing binder and carbon-containing binder being present in amounts of from 2 to 5% by weight.

2. Industrial furnace according to Claim 1, **characterized by** bricks composed of refractory material customarily used for such furnaces, which in the region of the surface on the fire-side of the masonry have carbon present in a zone, in particular in a zone having a thickness of from 1 to 18 cm, preferably from 2 to 15 cm.

3. Industrial furnace according to Claim 1 and/or 2, **characterized in that** the bricks have the formats customarily used.

4. Industrial furnace according to one or more of Claims 1 to 3, **characterized in that** the carbon is present in the bricks in the form of natural or synthetic graphite.

5. Industrial furnace according to Claim 4, **characterized in that** the bricks comprise floc graphite.

6. Industrial furnace according to Claim 4 and/or 5, **characterized in that** the binder is tar and/or pitch.

7. Industrial furnace according to Claim 4 and/or 5, **characterized in that** the bricks comprise synthetic resin as binder.

8. Industrial furnace according to Claim 7, **characterized in that** the bricks comprise phenolic resin as binder.

9. Industrial furnace according to Claim 7, **characterized in that** the bricks comprise phenolic resin-novolak as binder.

10. Industrial furnace according to one or more of Claims 1 to 9, **characterized in that** from 5 to 20% by weight of graphite is present in the carbon-containing zone of the bricks.

11. Industrial furnace according to one or more of Claims 1 to 10, **characterized in that** the carbon-containing binder is present in the bricks in amounts of from 2.5 to 4% by weight.

12. Industrial furnace according to Claim 1 or in one or more of Claims 1 to 11, **characterized in that** the carbon is homogeneously distributed in the entire brick.

13. Industrial furnace according to Claim 12, **characterized in that** the masonry is constructed of bricks comprising, in particular, a basic refractory material, in particular on the basis of MgO.

14. Industrial furnace according to Claim 13, **characterized in that** the masonry is constructed of bricks in which MgO is at least partly replaced by spinel and/or α-alumina and/or bauxite and/or andalusite and/or mullite and/or flint clay and/or chamotte.

15. Industrial furnace according to one or more of Claims 1 to 14, **characterized in that** the bricks have a porosity of less than 30% by volume, in particular less than 14% by volume, preferably a porosity in the range from 1 to 8% by volume.

16. Industrial furnace according to one or more of Claims 1 to 15, **characterized in that** the bricks comprise antioxidants known per se, in particular in amounts of from 1 to 10% by weight, preferably in amounts of from 2 to 8% by weight.

17. Industrial furnace according to one or more of Claims 1 to 16 having masonry in a sintering zone and/or upper transition zone of a rotary tube furnace or shaft kiln, **characterized in that** the masonry comprises carbon-containing bricks based on MgO and/or MgO/spinel mineral or MgO/bauxite or MgO/α-alumina or MgO/zirconium oxide.

18. Industrial furnace according to Claim 17, **characterized in that** the bricks have the following composition:
| | |
|---|---|
| Magnesia | 25 - 98% by weight, in particular |
| | 27 - 83% by weight |
| Spinel mineral | 0 - 40% by weight, in particular |
| | 5 - 30% by weight |
| Graphite | 2 - 30% by weight, in particular |
| | 5 - 20% by weight |
| Aluminum powder | 0 - 10% by weight, in particular |
| | 2 - 8% by weight |
| Silicon powder | 0 - 10% by weight, in particular |
| | 2 - 8% by weight |
| Silicon carbide | 0 - 10% by weight, in particular |
| powder | 3 - 7% by weight |
| Binder | 2 - 5% by weight, in particular |
| | 2.5 - 4% by weight |

19. Industrial furnace according to Claim 17, **characterized by** carbon-containing bricks based on spinel or bauxite or α-alumina.

20. Industrial furnace according to one or more of Claims 1 to 19 having masonry in a safety zone of a rotary tube furnace or shaft kiln, **characterized in that** the masonry comprises carbon-containing bricks based on andalusite or a mineral of the sillimanite group or bauxite or alumina-rich chamotte such as flint clay.

21. Industrial furnace according to Claim 20, **characterized by** bricks of the following composition:
| | |
|---|---|
| Alumina-rich | 50 - 98% by weight, in particular |
| chamotte | 57 - 88% by weight |
| Graphite | 2 - 30% by weight, in particular |
| | 5 - 20% by weight |
| Aluminum powder | 0 - 10% by weight, in particular |
| | 2 - 8% by weight |
| Silicon powder | 0 - 10% by weight, in particular |
| | 2 - 8% by weight |
| Silicon carbide | 0 - 10% by weight, in particular |
| powder | 3 - 7% by weight |
| Binder | 2 - 5% by weight, in particular |
| | 2.5 - 4% by weight |

22. Industrial furnace according to one or more of Claims 1 to 21 having masonry in a preheating zone of a rotary tube furnace or shaft kiln, **characterized in that** the masonry comprises carbon-containing bricks based on chamotte or lightweight chamotte.

23. Industrial furnace according to Claim 22, **characterized by** bricks of the following composition:
| | |
|---|---|
| Lightweight | 50 - 98% by weight, in particular |
| chamotte | 57-88% by weight |
| Graphite | 2 - 30% by weight, in particular |
| | 5 - 20% by weight |
| Aluminum powder | 0 - 10% by weight, in particular |
| | 2 - 8% by weight |
| Silicon powder | 0 - 10% by weight, in particular |
| | 2 - 8% by weight |
| Silicon carbide | 0 - 10% by weight, in particular |
| powder | 3 - 7% by weight |
| Binder | 2 - 5% by weight, in particular |
| | 2.5 - 4% by weight |

24. Industrial furnace according to one or more of Claims 1 to 23 having masonry in a lower transition zone or in an outlet zone of a rotary tube furnace or shaft kiln, **characterized in that** the masonry comprises carbon-containing bricks based on bauxite or magnesia.

25. Industrial furnace according to one or more of Claims 1 to 24, **characterized by** multilayer masonry in which the carbon-containing bricks are located on the hot side and bricks comprising an insulating material, e.g. lightweight refractory bricks or chamotte bricks, are located on the cold side.

## Revendications

1. Four industriel à grand volume, dans lequel l'on procède, dans une atmosphère de four pour l'essentiel oxydante, à la combustion de produits minéraux à des températures supérieures à 700°C, par exemple, du ciment, de la chaux, de la magnésite, de la dolomite ou similaires, le four industriel présentant une maçonnerie faite en pierres non brûlées en matériau réfractaire et les pierres dans l'intérieur dans la zone superficielle de la maçonnerie exposée aux flammes ou à la chaleur, contenant de 2 à 30 % en poids de carbone, le carbone étant contenu sous la forme de graphite et sous la forme de liant contenant du carbone, le liant contenant du carbone étant contenu dans des quantités de 2 à 5 % en poids.

2. Four industriel selon la revendication 1, **caractérisé par** des pierres en matériau réfractaire utilisé habituellement pour des fours de ce genre, qui présentent, dans la zone de la surface prévue pour la face tournée vers le feu de la maçonnerie, du carbone zonal, en particulier dans une zone épaisse de 1 à 18 cm, de préférence de 2 à 15 cm.

3. Four industriel selon la revendication 1 et/ou 2, **caractérisé en ce que** les pierres présentent des formats utilisés habituellement.

4. Four industriel selon l'une quelconque des revendications 1 à 3, **caractérisé en ce que** les pierres contiennent le carbone sous la forme de graphite naturel ou synthétique.

5. Four industriel selon la revendication 4, **caractérisé en ce que** les pierres contiennent du graphite en flocons.

6. Four industriel selon la revendication 4 et/ou 5, **caractérisé en ce que** le liant est du goudron et/ou du brai.

7. Four industriel selon la revendication 4 et/ou 5, **caractérisé en ce que** les pierres contiennent, en tant que liant, de la résine synthétique.

8. Four industriel selon la revendication 7, **caractérisé en ce que** les pierres contiennent, en tant que liant, de la résine phénolique.

9. Four industriel selon la revendication 7, **caractérisé en ce que** les pierres contiennent, en tant que liant, de la résine phénolique Novolak.

10. Four industriel selon l'une ou plusieurs des revendications 1 à 9, **caractérisé en ce que** les pierres dans la zone contenant du carbone contiennent du graphite dans des quantités de 5 à 20% en poids.

11. Four industriel selon l'une ou plusieurs des revendications 1 à 10, **caractérisé en ce que** les pierres contiennent le liant contenant du carbone dans des quantités de 2,5 à 4% en poids.

12. Four industriel selon la revendication 1 ou selon l'une ou plusieurs des revendications 1 à 11, **caractérisé en ce que** le carbone est réparti d'une manière homogène dans la pierre tout entière.

13. Four industriel selon la revendication 12, **caractérisé en ce que** la maçonnerie est formée à partir de pierres en matériau réfractaire, en particulier basique, en particulier à base de MgO.

14. Four industriel selon la revendication 13, **caractérisé en ce que** la maçonnerie est formée de pierres, dans lesquelles le MgO est au moins partiellement remplacé par du spinelle et/ou du corindon et/ou de la bauxite et/ou de l'andalousite et/ou de la mullite et/ou de l'argile à silex et/ou de la chamotte.

15. Four industriel selon l'une ou plusieurs des revendications 1 à 14, **caractérisé en ce que** les pierres présentent une porosité de moins de 30% en volume, en particulier de moins de 14% en volume, de préférence une porosité comprise entre 1 et 8% en volume.

16. Four industriel selon l'une ou plusieurs des revendications 1 à 15, **caractérisé en ce que** les pierres présentent des agents anti-oxydants connus en soi, en particulier dans des quantités de 1 à 10% en poids, de préférence dans des quantités de 2 à 8 % en poids.

17. Four industriel selon l'une ou plusieurs des revendications 1 à 16, avec une maçonnerie dans une zone de frittage et/ou dans une zone supérieure de transition d'un four tubulaire rotatif ou d'un four vertical, **caractérisé en ce que** la maçonnerie présente des pierres contenant du carbone à base de MgO ou de minéral de spinelle/MgO ou de MgO/bauxite ou de MgO/corindon ou de MgO/zircone.

18. Four industriel selon la revendication 17, **caractérisé en ce que** les pierres présentent la composition suivante :
| | |
|---|---|
| Magnésie | 25-98, e.p. 27-83 % en poids |
| Minéral de spinelle | 0-40, e.p. 5-30 % en poids |
| Graphite | 2-30, e.p. 5-20 % en poids |
| Poudre d'aluminium | 0-10, e.p. 2-8 % en poids |
| Poudre de silicium | 0-10, e.p. 2-8 % en poids |
| Poudre de carbure de silicium | 0-10, e.p. 3-7 % en poids |
| Liant | 2-5, e.p. 2,5-4 % en poids |
| | |
|---|---|
| e.p. = en particulier | |

19. Four industriel selon la revendication 17, **caractérisé par** des pierres contenant du carbone à base de spinelle ou de bauxite ou de corindon.

20. Four industriel selon l'une ou plusieurs des revendications 1 à 19, avec une maçonnerie dans une zone de sécurité d'un four tubulaire rotatif ou d'un four vertical, **caractérisé en ce que** la maçonnerie présente des pierres contenant du carbone, à base d'andalousite ou d'un minéral du groupe de la sillimanite ou de bauxite ou de chamotte riche en alun, comme l'argile à silex.

21. Four industriel selon la revendication 20, **caractérisé par** des pierres de la composition suivante :
| | |
|---|---|
| Chamotte riche en alun | 50-98, e.p. 57-88 % en poids |
| Graphite | 2-30, e.p. 5-20 % en poids |
| Poudre d'aluminium | 0-10, e.p. 2-8 % en poids |
| Poudre de silicium | 0-10, e.p. 2-8 % en poids |
| Poudre de carbure de silicium | 0-10, e.p. 3-7 % en poids |
| Liant | 2-5, e.p. 2,5-4 % en poids |
| | |
|---|---|
| e.p. = en particulier | |

22. Four industriel selon l'une ou plusieurs des revendications 1 à 21, avec une maçonnerie dans une zone de chauffage préalable d'un four tubulaire rotatif ou d'un four vertical, **caractérisé en ce que** la maçonnerie présente des pierres contenant du carbone, à base de chamotte ou de chamotte légère.

23. Four industriel selon la revendication 22, **caractérisé par** des pierres de la composition suivante :
| | |
|---|---|
| Chamotte légère | 50-98, e.p. 57-88 % en poids |
| Graphite | 2-30, e.p. 5-20 % en poids |
| Poudre d'aluminium | 0-10, e.p. 2-8 % en poids |
| Poudre de silicium | 0-10, e.p. 2-8 % en poids |
| Poudre de carbure de silicium | 0-10, e.p. 3-7 % en poids |
| Liant | 2-5, e.p. 2,5-4 % en poids |
| | |
|---|---|
| e.p = en particulier | |

24. Four industriel selon l'une ou plusieurs des revendications 1 à 23, avec une maçonnerie dans une zone inférieure de transition ou dans une zone de sortie d'un four tubulaire rotatif ou d'un four vertical, **caractérisé en ce que** la maçonnerie présente des pierres contenant du carbone à base de bauxite ou de magnésie.

25. Four industriel selon l'une ou plusieurs des revendications 1 à 24, **caractérisé par** une maçonnerie à plusieurs couches, dans laquelle les pierres contenant du carbone sont disposées sur la face exposée à la chaleur et dans laquelle les pierres en matériau isolant, par exemple, des briques légères réfractaires ou des briques de chamotte, sont disposées sur la face exposée au froid.
